# FASCICULE DE BREVET EUROPEEN

(11) **EP 3 049 284 B1**
(45) Date de publication et mention de la délivrance du brevet: **03.03.2021**
(21) Numéro de dépôt: 14784319.7
(22) Date de dépôt: 22.09.2014
(51) Int. Cl.: F21S 43/50, F21S 43/20

(54) **DISPOSITIF D'ÉCLAIRAGE À DEUX FONCTIONS D'ÉCLAIREMENT ASSURÉES PAR UN MÊME GROUPE DE SOURCE(S) DE LUMIÈRE ET DES FUITES DE LUMIÈRE**
BELEUCHTUNGSVORRICHTUNG MIT ZWEI BELEUCHTUNGSFUNKTIONEN, DIE VON EINER EINZIGEN LICHTQUELLENGRUPPE AUSGEFÜHRT WERDEN, UND LICHTLECKS
ILLUMINATION DEVICE HAVING TWO ILLUMINATION FUNCTIONS CARRIED OUT BY A SINGLE SET OF LIGHT SOURCES AND LIGHT LEAKS

(30) Priorité: 27.09.2013 FR 1359332
(43) Date de publication de la demande: 03.08.2016
(73) Titulaire: PSA Automobiles SA, 78300 Poissy (FR)
(72) Inventeur: VIDEIRA, Filipe, 78140 Vélizy Villacoublay (FR); CARROUGET, Alain, 28700 Levainville (FR); MOYNIER, Gilles, 72190 Sargé-lès-le-Mans (FR)
(86) Numéro de dépôt international: PCT/FR2014/052342
(87) Numéro de publication internationale: WO 2015/044569

(56) Documents cités:
- EP-A1- 1 862 728
- EP-A1- 1 912 017
- EP-A2- 2 360 426
- EP-A2- 2 541 135
- DE-A1- 19 704 675
- DE-A1-102004 003 577
- DE-A1-102007 019 687
- DE-A1-102007 033 711
- DE-A1-102008 061 431
- JP-A- 2008 068 680
- US-A1- 2007 236 953

## Description

L'invention concerne les dispositifs d'éclairage qui comportent un écran rétroéclairé par des photons produits par au moins une source de lumière et réfléchis par au moins un réflecteur.

On entend ici par « dispositif d'éclairage » un dispositif lumineux pouvant assurer deux fonctions d'éclairement, choisies parmi l'éclairage, la signalisation et un effet lumineux décoratif.

Comme le sait l'homme de l'art, certains dispositifs d'éclairage, qui équipent certains systèmes, comme par exemple certains véhicules, éventuellement de type automobile, comprennent un écran (éventuellement opalin) muni d'une face arrière, au moins un réflecteur propre à transférer des photons vers la face arrière de cet écran pour qu'ils participent à une fonction d'éclairement, et au moins une source de lumière (comportant généralement au moins une diode électroluminescente (ou LED) ou une diode laser) propre à délivrer les photons.

Lorsque le système doit offrir localement deux fonctions d'éclairement différentes, par exemple au niveau d'un bloc optique, il doit comporter à cet effet soit deux dispositifs d'éclairage placés l'un à côté de l'autre de façon étanche pour éviter les fuites de lumière et comportant chacun leur propre groupe de source(s) lumineuse(s), soit un unique dispositif d'éclairage comportant deux sous-parties voisines, séparées de façon étanche pour éviter les fuites de lumière et comportant chacune leur propre groupe de source(s) lumineuse(s). On notera que cette étanchéité peut résulter d'une contrainte esthétique et/ou d'une contrainte réglementaire.

Dans un cas comme dans l'autre, chaque groupe de source(s) lumineuse(s) n'assure qu'une unique fonction d'éclairement, ce qui s'avère onéreux. En outre, les deux groupes de source(s) lumineuse(s) s'avèrent relativement encombrants, alourdissent le système qu'ils équipent, et peuvent nécessiter la présence de moyens de refroidissement séparés qui alourdissent également le système et augmentent son coût, sa consommation d'énergie électrique et sa complexité. De plus, l'étanchéité nécessite des artifices (comme par exemple des murets ou des cloisons) qui augmentent la complexité de l'ensemble. Des dispositifs d'éclairage sont connus des EP2541135 A2, DE102007033711 A1, EP1862728 A1 et DE102008061431 A1.

L'invention a donc pour but d'améliorer la situation en utilisant un même groupe de source(s) lumineuse(s) et des fuites de lumière pour assurer deux fonctions d'éclairement différentes.

Elle propose notamment à cet effet un dispositif d'éclairage comprenant un premier écran muni d'une face arrière, au moins un réflecteur propre à transférer des photons vers la face arrière du premier écran pour qu'ils participent à une première fonction d'éclairement, et une plaque de support munie d'au moins une source de lumière propre à délivrer les photons.

L'invention propose un bloc optique selon la revendication 1 qui se caractérise par le fait :
- que sa plaque de support comporte une extrémité avant qui se termine à une distance choisie du premier écran pour permettre une fuite de photons ne participant pas à la première fonction d'éclairement dans une zone située après le premier écran et devant elle, et
- qu'il comprend en outre un second écran muni d'une face arrière placée devant la zone et propre à être rétro-éclairée par des photons ayant fui dans la zone pour assurer une seconde fonction d'éclairement.

Grâce à l'invention, une même source de lumière contribue désormais directement à la première fonction d'éclairement et indirectement via des fuites crées volontairement à la seconde fonction d'éclairement, ce qui permet de réduire le coût de fabrication, la consommation d'énergie électrique, le poids, l'encombrement et la complexité.

Le bloc optique selon l'invention peut comporter d'autres caractéristiques qui peuvent être prises séparément ou en combinaison, et notamment :
- son second écran est réalisé dans une paroi qui est propre à permettre une propagation interne de photons en vue de leur participation à la seconde fonction d'éclairement ;
   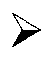 la paroi comprend une partie définissant le premier écran, et une partie de liaison reliant le premier écran au second écran ;
   - la partie de liaison peut comporter une face avant orientée vers l'extérieur et masquée par une paroi additionnelle opaque ;
- il peut comprendre N sources de lumière associées respectivement à N réflecteurs, avec N ≥ 2 ;
- son second écran peut être opalin ;
- son second écran peut comprendre au moins un motif de forme choisie et propre à être rétro-éclairé ;
- chaque source de lumière peut comprendre au moins une diode lumineuse, par exemple de type électroluminescent ou laser.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective du côté avant, une partie d'un bloc optique comprenant un exemple de réalisation d'un dispositif d'éclairage selon l'invention,
- la figure 2 illustre schématiquement, dans une vue en perspective du côté avant, une partie du dispositif d'éclairage de la figure 1, avant son intégration dans un bloc optique, et
- la figure 3 illustre schématiquement, dans une vue en coupe, une partie du bloc optique de la figure 1.

L'invention a notamment pour but de proposer un dispositif d'éclairage D permettant de remplir deux fonctions d'éclairement (éclairage ou signalisation ou effet lumineux (éventuellement décoratif)).

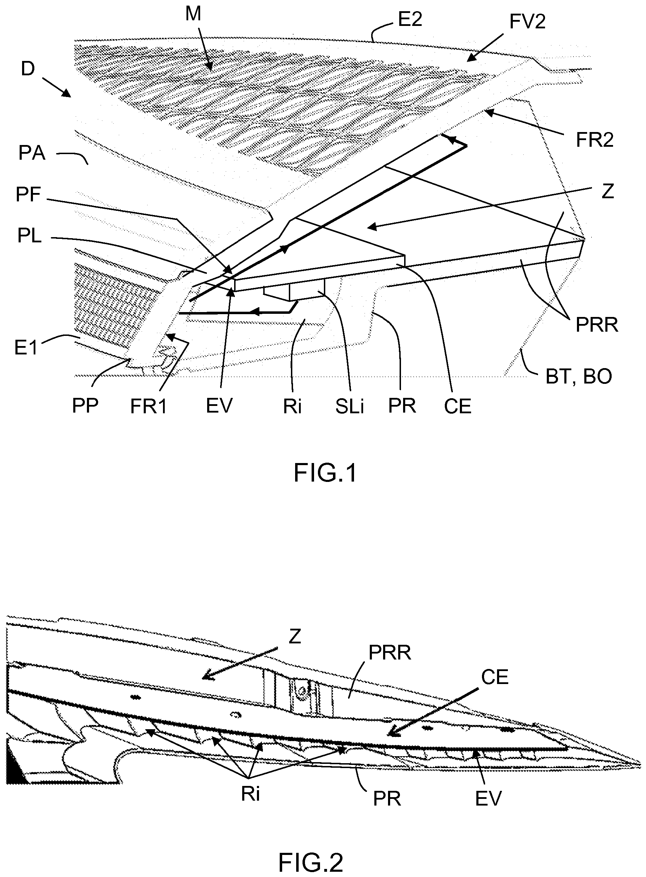

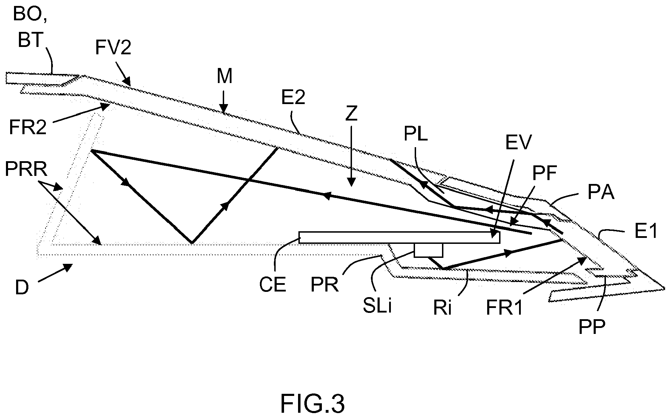

Dans ce qui suit, on considère, à titre d'exemple non limitatif, que le dispositif d'éclairage D est destiné à faire partie d'un bloc optique BO (très partiellement représenté sur les figures 1 et 3) d'un véhicule, éventuellement de type automobile. Mais l'invention n'est pas limitée à cette application. En effet, un dispositif d'éclairage D, selon l'invention, peut équiper tout type de système, équipement, appareil ou dispositif, y compris des murs intérieurs ou extérieurs de bâtiment.

On notera que le bloc optique BO peut être aussi bien un phare (ou projecteur avant), qu'un feu arrière. A titre d'exemple non limitatif, un dispositif d'éclairage D peut assurer à la fois une première fonction de type feu diurne (ou DRL (pour « Daytime running Light (or Lamp) » - signalisation lumineuse allumée automatiquement lorsque le véhicule est mis en fonctionnement)) ou une première fonction de type feu stop, et une seconde fonction de type effet lumineux décoratif.

On a schématiquement illustré sur la figure 1 une partie d'un bloc optique BO comprenant un premier exemple de réalisation d'un dispositif d'éclairage D selon l'invention. Ce bloc optique BO comprend un boîtier BT (très partiellement illustré) logeant le dispositif d'éclairage D.

Comme illustré sur les figures 1 et 3, un dispositif d'éclairage D, selon l'invention, comprend un premier écran E1, au moins un réflecteur Ri, une plaque de support CE munie d'au moins une source de lumière SLi, et d'un second écran E2.

Le premier écran E1 comporte une face avant FV1 orientée vers l'extérieur et une face arrière FR1 orientée vers l'intérieur du bloc optique BO. Il est ici solidarisé au boîtier BT du bloc optique BO.

Ce premier écran E1 peut être translucide ou opalin, selon les besoins (et plus précisément selon la première fonction d'éclairement à laquelle il participe). Par ailleurs, il peut être réalisé en matière plastique (ou synthétique) ou en verre.

Le second écran E2 comporte une face avant FV2 orientée vers l'extérieur et une face arrière FR2 orientée vers l'intérieur du bloc optique BO. Il est ici solidarisé au boîtier BT du bloc optique BO.

La face arrière FR2 du second écran E2 est placée devant une zone Z qui est par ailleurs située après le premier écran E1 et devant (ou après) la plaque de support CE.

Comme illustré non limitativement sur la figure 1, le second écran E2 peut éventuellement comprendre au moins un motif M de forme choisie et propre à être rétro-éclairé (via la face arrière FR2 et l'épaisseur de la paroi PP dans lequel il est défini) par des photons de fuite (décrits plus loin).

Chaque motif M peut être réalisé sur la face avant FV2 du second écran E2 de différentes manières, et notamment par métallisation puis ablation laser, ou par métallisation partielle au moyen d'un masque d'épargne de métallisation, ou par sérigraphie sur un film collé ou surmoulé, ou encore par impression.

On notera que le second écran E2 peut être translucide (éventuellement avec des microéléments optiques définissant un rideau de lumière) ou bien opalin, selon les besoins (et plus précisément selon la seconde fonction d'éclairement à laquelle il participe). Le caractère opalin est notamment avantageux lorsque la face avant FV2 du second écran E2 comprend au moins un motif M, car cela permet d'offrir un meilleur rendu de ce dernier (M) lorsqu'il est rétro-éclairé et de le rendre quasiment insivible lorsqu'il n'est pas rétro-éclairé. Par ailleurs, le second écran E2 peut être réalisé en matière plastique (ou synthétique) ou en verre.

On notera également que dans l'exemple non limitatif illustré sur les figures 1 et 2, le dispositif d'éclairage D comprend plusieurs (N) réflecteurs Ri (i = 1 à N, avec N ≥ 2), placés les uns à côté des autres et associés chacun à une source de lumière SLi. Mais il pourrait ne comporter qu'un seul réflecteur Ri associé à une unique source de lumière SLi.

Le (chaque) réflecteur Ri peut constituer une parabole adaptée à la réflexion de photons incidents suivant une direction générale.

Le (chaque) réflecteur Ri est agencé de manière à transférer des photons, issus de la source de lumière SLi associée, vers la face arrière FR1 du premier écran E1, comme illustré schématiquement sur les figures 1 et 3.

Dans l'exemple non limitatif illustré sur les figures 1 à 3, les N réflecteurs Ri sont définis dans une même pièce PR réalisée par moulage ou injection d'une matière plastique ou synthétique. Mais ils pourraient être réalisés dans des pièces différentes. Cette pièce PR peut être réalisée en matière plastique (ou synthétique), comme par exemple en PMMA.

On notera que, le (chaque) réflecteur Ri peut être dépourvu de revêtement afin de renvoyer les photons incidents vers la face arrière FR1 du premier écran E1 selon différentes directions générales d'éclairement et ainsi d'éviter la formation de zones sensiblement plus lumineuses que d'autres.

La (chaque) source de lumière SLi est agencée de manière à délivrer les photons qui sont destinés à éclairer les premier E1 et second E2 écrans.

Chaque source de lumière SLi peut, par exemple, comprendre au moins une diode lumineuse. Cette dernière peut, par exemple, être une diode électroluminescente (ou LED) ou une diode laser. Mais dans une variante de réalisation, les N sources de lumière SL pourraient être constituées par un guide de lumière à sorties multiples.

Chaque source de lumière SLi est montée sur la plaque de support CE qui est en outre, de préférence, destinée à permettre son contrôle et son alimentation électrique, comme illustré non limitativement sur les figures 1 et 3. Cette plaque de support CE peut, par exemple, être une carte à circuits imprimés, de type PCB (« Printed Circuit Board »), rigide ou flexible (de type « Flex »).

Cette plaque de support CE comprend une extrémité avant EV qui se termine à une distance choisie du premier écran E1 afin de permettre une fuite dans la zone Z de photons, qui ne participent pas à la première fonction d'éclairement. Les photons de fuite qui se retrouvent dans la zone (de fuite) Z peuvent alors rétro-éclairer la face arrière FR2 du second écran E2 afin d'assurer la seconde fonction d'éclairement.

Le fait que l'extrémité avant EV de la plaque de support CE se termine avant (ici) le « haut » du premier écran E1 permet de définir un passage PF par lequel peuvent passer certains photons, qui ne sont pas parvenus à atteindre la face arrière FR1 du premier écran E1, afin de rejoindre la zone (de fuite) Z qui est située derrière la face arrière FR2 du second écran E2 (comme illustré sur les figures 1 et 3).

Ainsi, une même source de lumière SLi peut avantageusement contribuer directement à la première fonction d'éclairement et indirectement, via au moins le passage de fuite PF créé volontairement, à la seconde fonction d'éclairement, ce qui permet de réduire le coût de fabrication, la consommation d'énergie électrique, le poids, l'encombrement et la complexité.

Afin d'améliorer l'efficacité de l'éclairement de la face arrière FR2 du second écran E2, le dispositif d'éclairage comprend en complément une paroi arrière réflectrice PRR s'étendant entre le second écran E2 et la plaque de support PS en délimitant avec ces derniers (E2, PS) la zone Z. Cette paroi arrière réflectrice PRR est ici agencée pour réfléchir vers la face arrière FR2 du second écran E2 des photons qui ont fui dans la zone Z.

Comme illustré non limitativement, cette paroi arrière réflectrice PRR peut éventuellement constituer une extension de la paroi PR dans laquelle sont définis les N réflecteurs Ri.

De préférence, et comme illustré non limitativement sur la figure 3, le second écran E2 est réalisé dans une paroi PP qui est agencée de manière à permettre une propagation interne de photons afin qu'ils participent à la seconde fonction d'éclairement. Cela permet d'améliorer l'efficacité de l'éclairement de la face arrière FR2 du second écran E2.

On notera, comme illustré non limitativement sur les figures 1 et 3, que cette paroi PP comprend une partie (ici « inférieure ») qui définit le premier écran E1, et une partie de liaison PL qui relie le premier écran E1 au second écran E2. Cela facilite notablement la propagation des photons de fuite dans l'épaisseur (ou la masse) de la paroi PP, et donc leur transfert du premier écran E1 vers le second écran E2 en vue de rétro-éclairer la face arrière FR2 de ce dernier (E2). En outre, cela permet de réaliser dans une même pièce les premier E1 et second E2 écrans.

Afin de ne pas perdre des photons qui se propagent dans la paroi PP au niveau de sa partie de liaison PL, il est avantageux que la face avant FV2 de cette dernière (PL), qui est orientée vers l'extérieur, soit masquée par une paroi additionnelle PA opaque (ou réfléchissante), comme illustré non limitativement sur les figures 1 et 3. Cette paroi additionnelle PA est par exemple solidarisée fixement à la paroi PP.

En variante, la face avant FV2 de la partie de liaison PL pourrait être traitée afin d'imposer des réflexions internes totales. Un tel traitement peut, par exemple, consister en une métallisation.

On notera également que pour éviter qu'une partie importante des photons qui se propagent dans la paroi PP sortent dans la partie inférieure du second écran E2 (située dans le prolongement de la partie de liaison PL), ce qui nuirait à l'homogénéité du second éclairement, on peut traiter sa face externe FV2 sur une courte distance afin d'imposer localement des réflexions internes totales. Un tel traitement peut, par exemple, consister en une métallisation.

On notera également, bien que cela n'apparaisse pas sur les figures, que le dispositif d'éclairage D pourrait comprendre une pièce interne additionnelle placée en sortie (ou aval) du passage de fuite PF, et agencée de manière à faciliter la réflexion des photons de fuite vers la face arrière FR2 du second écran E2.

L'invention offre plusieurs avantages, parmi lesquels :
- un faible encombrement,
- un faible coût de fabrication,
- une complexité réduite,
- une consommation d'énergie électrique réduite.

## Revendications

1. Bloc optique (BO) comprenant un premier écran (E1) muni d'une face arrière (FR1) orientée vers l'intérieur du bloc optique (BO), au moins un réflecteur (Ri) transférant des photons vers ladite face arrière (FR1) du premier écran (E1) pour qu'ils participent à une première fonction d'éclairement, et une plaque de support (CE) munie d'au moins une source de lumière (SLi) délivrant lesdits photons, dans lequel ladite plaque de support (CE) comprend une extrémité avant (EV) orientée vers l'extérieur du bloc optique (BO), se terminant à une distance choisie dudit premier écran (E1) **caractérisé en ce que** ladite extrémité avant (EV) délimite un passage (PF) permettant aux photons ne participant pas à ladite première fonction d'éclairement de rejoindre une zone (Z) derrière ladite plaque de support (CE), ladite zone (Z) étant délimitée par la plaque support (CE), la face arrière (FR2) d'un second écran (E2) et d'une paroi réflectrice (PRR) s'étendant entre la face arrière (FR2) du second écran (E2) et la plaque support (CE) de manière à réfléchir les photons ayant fui par le passage (PF), pour rétroéclairer la face arrière (FR2) du second écran (E2) afin d'assurer une seconde fonction d'éclairement, et que edit second écran (E2) est réalisé dans une paroi (PP) propre à permettre une propagation interne de photons en vue de leur participation à ladite seconde fonction d'éclairement, et que adite paroi (PP) comprend une partie définissant ledit premier écran (E1), et une partie de liaison (PL) reliant ledit premier écran (E1) audit second écran (E2).

2. Bloc optique selon la revendication 1, **caractérisé en ce que** ladite partie de liaison (PL) comporte une face avant (FV2) orientée vers l'extérieur et masquée par une paroi additionnelle (PA) opaque.

3. Bloc optique selon l'une des revendications 1 ou 2, **caractérisé en ce qu'**il comprend N sources de lumière (SLi) associées respectivement à N réflecteurs (Ri), avec N ≥ 2.

4. Bloc optique selon l'une des revendications 1 à 3, **caractérisé en ce que** ledit second écran (E2) comprend au moins un motif (M) de forme choisie et propre à être rétroéclairé.

5. Bloc optique selon l'une des revendications 1 à 4, **caractérisé en ce que** chaque source de lumières (SLi) comprend au moins une diode lumineuse.

6. Véhicule, **caractérisé en ce qu'**il comprend au moins un bloc optique (BO) selon l'une des revendications 1 à 5.

## Patentansprüche

1. Optischer Block (BO) mit einem ersten Schirm (E1), der mit einer zum Inneren des optischen Blocks (BO) gerichteten Rückseite (FR1) versehen ist, mit mindestens einem Reflektor (Ri), der Photonen zur besagten Rückseite (FR1) des ersten Schirms (E1) überträgt, so dass sie an einer ersten Beleuchtungsfunktion teilnehmen, und mit einer Trägerplatte (CE), die mit mindestens einer Lichtquelle (SLi) versehen ist, die die besagten Photonen liefert, in der die Trägerplatte (CE) ein vorderes Ende (EV) aufweist, das zur Außenseite des optischen Blocks (BO) gerichtet ist und in einem gewählten Abstand von dem ersten Schirm (E1) endet, **dadurch gekennzeichnet, dass** das vordere Ende (EV) einen Durchgang (PF) begrenzt, der es Photonen, die nicht an der ersten Beleuchtungsfunktion teilnehmen, ermöglicht, in eine Zone (Z) einzutreten, hinter der Trägerplatte (CE), wobei die Zone (Z) durch die Trägerplatte (CE), die Rückseite (FR2) eines zweiten Schirms (E2) und eine reflektierende Wand (PRR), die sich zwischen der Rückseite (FR2) des zweiten Schirms (E2) und der Trägerplatte (CE) erstreckt, begrenzt ist, um die durch den Durchgang (PF) ausgetretenen Photonen zu reflektieren, um die Rückseite (FR2) des zweiten Schirms (E2) von hinten zu beleuchten, um eine zweite Beleuchtungsfunktion zu gewährleisten, und dass der zweite Schirm (E2) in einer Wand (PP) hergestellt ist, die geeignet ist, die interne Ausbreitung von Photonen im Hinblick auf ihre Teilnahme an der zweiten Beleuchtungsfunktion zu ermöglichen, und dass die Wand (PP) einen Abschnitt, der den ersten Schirm (E1) definiert, und einen Verbindungsabschnitt (PL) umfasst, der den ersten Schirm (E1) mit dem zweiten Schirm (E2) verbindet.

2. Optischer Block nach Anspruch 1, **dadurch gekennzeichnet, dass** der Anschlussteil (PL) eine nach außen gerichtete und durch eine zusätzliche lichtundurchlässige Wand (PA) verdeckte Stirnfläche (FV2) aufweist.

3. Optischer Block nach einem der Ansprüche 1 oder 2, **dadurch gekennzeichnet, dass** er N Lichtquellen (SLi) umfasst, die jeweils N Reflektoren (Ri) zugeordnet sind, wobei N ≥ 2 ist.

4. Optischer Block nach einem der Ansprüche 1 bis 3, **dadurch gekennzeichnet, dass** der zweite Bildschirm (E2) mindestens ein Muster (M) von gewählter Form umfasst, das geeignet ist, hinterleuchtet zu werden.

5. Optischer Block nach einem der Ansprüche 1 bis 4, **dadurch gekennzeichnet, dass** jede Lichtquelle (SLi) mindestens eine lichtemittierende Diode umfasst.

6. Fahrzeug, **dadurch gekennzeichnet, dass** es mindestens einen optischen Block (BO) nach einem der Ansprüche 1 bis 5 umfasst.

## Claims

1. Optical block (BO) comprising a first screen (E1) provided with a rear face (FR1) oriented towards the interior of the optical block (BO), at least one reflector (Ri) transferring photons towards said rear face (FR1) of the first screen (E1) so that they participate in a first illumination function, and a support plate (CE) provided with at least one light source (SLi) delivering said photons, wherein said support plate (CE) comprises a front end (EV) oriented towards the outside of the optical block (BO), ending at a chosen distance from said first screen (E1) **characterized in that** said front end (EV) delimits a passage (PF) allowing photons not participating in said first illumination function to reach a zone (Z), behind said support plate (CE), said zone (Z) being delimited by the support plate (CE), the rear face (FR2) of a second screen (E2) and a reflecting wall (PRR) extending between the rear face (FR2) of the second screen (E2) and the support plate (CE) so as to reflect the photons that have leaked through the passage (PF), to backlight the rear face (FR2) of the second screen (E2) in order to provide a second illumination function, and **in that** the second screen (E2) is made in a wall (PP) capable of allowing internal propagation of photons with a view to their participation in said second illumination function, and **in that** said wall (PP) comprises a portion defining said first screen (E1), and a connecting portion (PL) connecting said first screen (E1) to said second screen (E2).

2. Optical block according to claim 1, **characterized in that** said connecting part (PL) has a front face (FV2) oriented outwardly and masked by an additional opaque wall (PA).

3. Optical block according to one of claims 1 or 2, **characterized in that** it comprises N light sources (SLi) associated respectively with N reflectors (Ri), with N ≥ 2.

4. Optical block according to one of claims 1 to 3, **characterized in that** said second screen (E2) comprises at least one pattern (M) of chosen shape and suitable for being backlit.

5. Optical block according to one of claims 1 to 4, **characterized in that** each light source (SLi) comprises at least one light-emitting diode.

6. Vehicle, **characterized in that** it comprises at least one optical block (BO) according to one of claims 1 to 5.
